# EUROPEAN PATENT APPLICATION

(11) **EP 0 907 124 A1**
(43) Date of publication of application: **07.04.1999**
(21) Application number: 98911056.4
(22) Date of filing: 27.03.1998
(51) Int. Cl.: G06F 9/06

(54) **MICROCOMPUTER AND ELECTRONIC EQUIPMENT**

(30) Priority: 31.03.1997 JP 96453/97
(71) Applicant: SEIKO EPSON CORPORATION, Shinjuku-ku, Tokyo 163-0811 (JP)
(72) Inventor: KUDO, Makoto, Suwa-shi, Nagano 392-8502 (JP); MIYAYAMA, Yoshiyuki, Suwa-shi, Nagano 392-8502 (JP); KUBOTA, Satoshi, Suwa-shi, Nagano 392-8502 (JP)
(74) Representative: Hoffmann, Eckart, Dipl.-Ing.
(86) International application number: JP9801393
(87) International publication number: WO9844408

(57) **Abstract**

A microcomputer which allows the user to select an arbitrary program startup location after resetting, and electronic equipment containing the microcomputer. The microcomputer comprises a CPU (control circuit) for reading out an instruction, analyzing it, and controlling execution thereof, a specific changeover terminal BTA3, and a changeover circuit for switching a boot address to be read out first by the CPU after resetting, according to the state of the changeover terminal BTA3. When the changeover terminal BTA3 is in a state '1', a trap vector of 0x00080000 is generated to start a reset processing program stored in an internal ROM. When the changeover terminal BTA3 is in a state '0', a trap vector of 0x00C00000 is generated to start a reset processing program stored in an external ROM. This arrangement allows the user to make a program startup from the external ROM in the product development phase and from the internal ROM in the mass-production phase, for example.

## Description

### TECHNICAL FIELD

The present invention relates to a microcomputer and electronic equipment.

### BACKGROUND ART

Recent years have seen an increasing demand for a microcomputer that is incorporated in a home game machine, car navigation system, printer, portable information terminal or other electronic equipment for accomplishing advanced information processing.

In most configurational arrangements, such a microcomputer is provided with a ROM inside, i.e., an internal ROM. The internal ROM stores a user-generated program, and after the microcomputer is reset, a reset processing program (a program to be executed first after resetting) contained in the internal ROM is usually called into execution first.

In general, the internal ROM is a mask ROM and therefore a certain period of time (turnaround time) is required after completion of a mask pattern design until delivery of IC to engineers. In development of a product containing a microcomputer by most users, it is common practice to debug a program through use of an external ROM such as EPROM or EEPROM allowing the rewriting of data in a relatively brief period of time instead of the internal ROM. Some users employ only the external ROM for giving priority to prompt countermeasures against a possible defect in a product, i.e., it is not desirable to use the internal ROM in some cases.

In a conventional microcomputer, however, it is permissible to start a program therein only from its internal ROM after resetting. Therefore, even in a situation where only the external ROM is used instead of the internal ROM, the reset processing program must be stored in the internal ROM, causing inconvenience to users.

On the other hand, if it is arranged that a program startup can be made only from the external ROM, the reset processing program must be stored in the external ROM even in a situation where only the internal ROM is used, without employing the external ROM. This also results in inconvenience to users. More particularly, since the use of the external ROM incurs an increase in production cost, most users employ the external ROM in the product development phase but only the internal ROM in the mass-production phase. For these users, a design arrangement whereby a program startup can be made only from the external ROM is disadvantageous.

In view of this technical problem, it is an object of the present invention to provide a microcomputer that allows users to select an arbitrary program startup location after resetting, and electronic equipment containing the same.

### DISCLOSURE OF THE INVENTION

In accomplishing this object, a microcomputer of the present invention comprises: a control circuit for reading an instruction, analyzing the instruction and controlling execution thereof; a given changeover terminal; and a changeover circuit for switching a boot address to be read first by the control circuit after resetting according to the state of the changeover terminal.

In accordance with the present invention, if the changeover terminal is in the first state for example, the control circuit reads an instruction and its address from a first boot address after resetting. The control circuit therefore starts instruction execution according to the program stored at the first boot address. In contrast, if the changeover terminal is in the second state, the control circuit reads out an instruction and its address from a second boot address. In this case, the control circuit therefore starts instruction execution according to the program stored at the second boot address. More specifically, in the present invention, it is possible to select the location in which a program to be carried out first after resetting is stored. This means that the users can select an arbitrary startup location for the program to be executed first after resetting, thus enhancing user convenience substantially.

In the abovementioned arrangement, a top instruction of the program to be executed first after resetting may be stored at the boot address, or a jump instruction to an address of a top instruction of the program to be executed first after resetting may be stored at the boot address. Further, an address of a top instruction of the program to be executed first after resetting may be stored at the boot address.

In the microcomputer of the present invention, the boot address may be an address of the internal ROM incorporated in the microcomputer when the changeover terminal is in the first state; and the boot address may be an address of the external ROM disposed outside the microcomputer when the changeover terminal is in the second state. In this arrangement, the user can determine arbitrarily whether the program is to be started from the internal ROM or the external ROM, thus improving user convenience significantly.

Electronic equipment of the present invention comprises: the aforementioned microcomputer; an input data source for supplying data to be processed by the microcomputer; and an output apparatus for outputting data processed by the microcomputer. In this provision, a system can be configured without using an external or internal memory as desired thus reducing cost, physical size, consumption of power, and development time of the electronic equipment.

### BRIEF DESCRIPTION OF THE DRAWINGS

Figure 1 is a block diagram showing an example of a microcomputer configuration in the first embodiment.
Figures 2A, 2B and 2C are diagrams illustrating some techniques for starting execution of a reset processing program on the basis of a boot address.
Figure 3 is a flowchart for explaining an example of operation in detail in the first embodiment.
Figure 4 shows an example of memory mapping for explaining a trap vector and a trap vector table.
Figure 5 shows an example of a microcomputer configuration in the second embodiment.
Figures 6A, 6B and 6C are internal block diagrams illustrating some electronic equipment.
Figures 7A, 7B and 7C are external views showing some examples of electronic equipment.

### BEST MODE FOR CARRYING OUT THE INVENTION

Preferred embodiments of the present invention will now be described in detail with reference to the accompanying drawings.

### First Embodiment

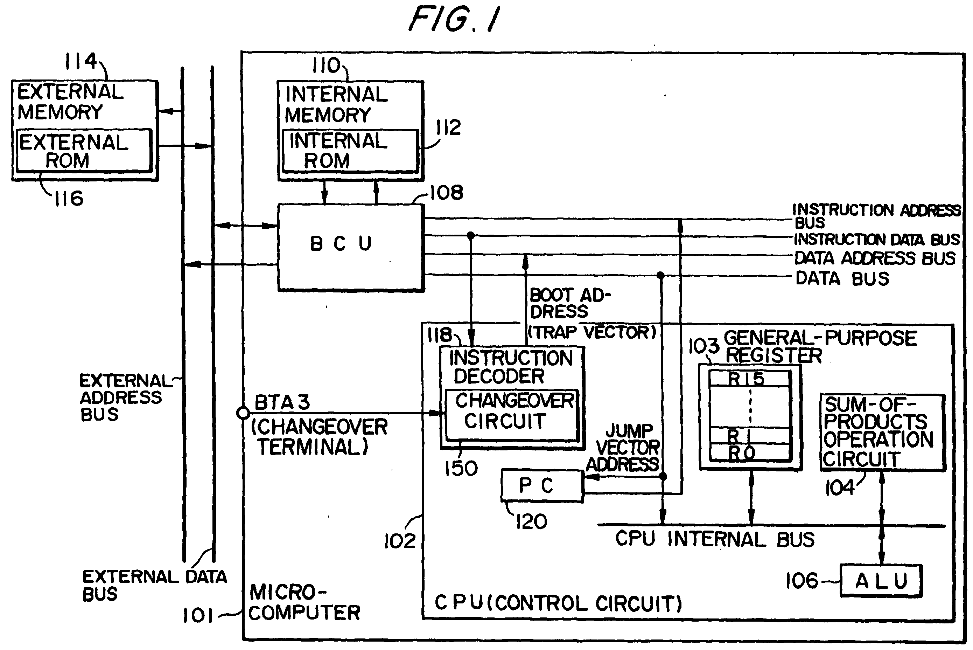

Figure 1 shows a block diagram of the microcomputer 101 in the present embodiment.

The microcomputer 101 shown in Figure 1 comprises a CPU 102 (control circuit) for processing 32-bit data for example, a bus control unit (BCU) 108 for controlling a bus, and an internal memory 110 including an internal ROM 112.

Disposed outside the microcomputer 101 is an external memory 114 including an external ROM 116.

The CPU 102 receives instructions from the internal memory 110 or the external memory 114, analyzes them, and controls processing for executing the analyzed instructions. In the present embodiment, an instruction having a length of 16 bits is used. The CPU 102 comprises an instruction decoder 118 for analyzing an instruction from the instruction data bus, a program counter (PC) 120, a general-purpose register block 103 having sixteen 32-bit registers R0 to R15, a sum-of-products operation circuit 104 for performing sum-of-products calculations, and an arithmetic and logic unit (ALU) 106 for performing arithmetic calculations such as addition, subtraction, multiplication and division on data and logical operations such as logical ORing, logical ANDing and logical shifting. The sum-of-products operation circuit 104 carries out sum-of-products calculations, and the ALU 106 carries out various calculations. The instruction decoder 118 includes a changeover circuit 150.

The general-purpose register block 103, the sum-of-products operation circuit 104 and the ALU 106 send or receive data through a CPU internal bus. The BCU 108 performs bus control for reading various instructions and various data necessary for execution thereof from the internal memory 110 or the external memory 114 and for writing data to the internal memory 110 or the external memory 114.

It is to be understood that the present invention is not limited in its application to the details of the abovementioned description concerning the bit length of data processed by the microcomputer/CPU, the number of general-purpose registers, etc.

One of features of the present preferred embodiment is that the microcomputer 101 is provided with a changeover terminal BTA3 and a changeover circuit 150 for switching a boot address to be read first by the CPU 102 after resetting, according to the state of the changeover terminal BTA3. In this arrangement, the user can determine whether a program startup after resetting is to be made from the internal ROM 112 or the external ROM 116.

For example, if it is desired to start a program from the internal ROM 112 after resetting, a reset processing program to be executed first after resetting is stored in the internal ROM 112 and the changeover terminal BTA3 is set to state '1' (high level), for instance. Under this condition, a boot address generated by the changeover circuit 150 after resetting is an address of the internal ROM 112, and the CPU 102 reads this boot address after resetting. Therefore, if the boot address is set at the top address location of the reset processing program, for example, the program is started from the internal ROM 112.

On the other hand, if it is desired to start a program from the external ROM 116 after resetting, the reset processing program is stored in the external ROM 116 and BTA3 is set to state '0' (low level), for instance. Under this condition, a boot address generated by the changeover circuit 150 after resetting is an address of the external ROM 116, and the CPU 102 reads this boot address after resetting. Therefore, if the boot address is set at the top address location of the reset processing program, for example, the program is started from the external ROM 116.

There may be various techniques for starting execution of the reset processing program using a boot address.

For example, in Figure 2A, the top instruction of the reset processing program to be executed first after resetting is stored at a boot address. Namely, the boot address itself is the top address of the reset processing program. In this case, therefore, the top instruction is read according to the boot address to start execution of the reset processing program.

In Figure 2B, a jump instruction instructing to jump to an address of the top instruction of the reset processing program (or top address of the reset processing program) is stored at a boot address. In this case, therefore, the jump instruction is read according to the boot address, the jump instruction is carried out to read the top instruction of the reset processing program, and then execution of the reset processing program is started.

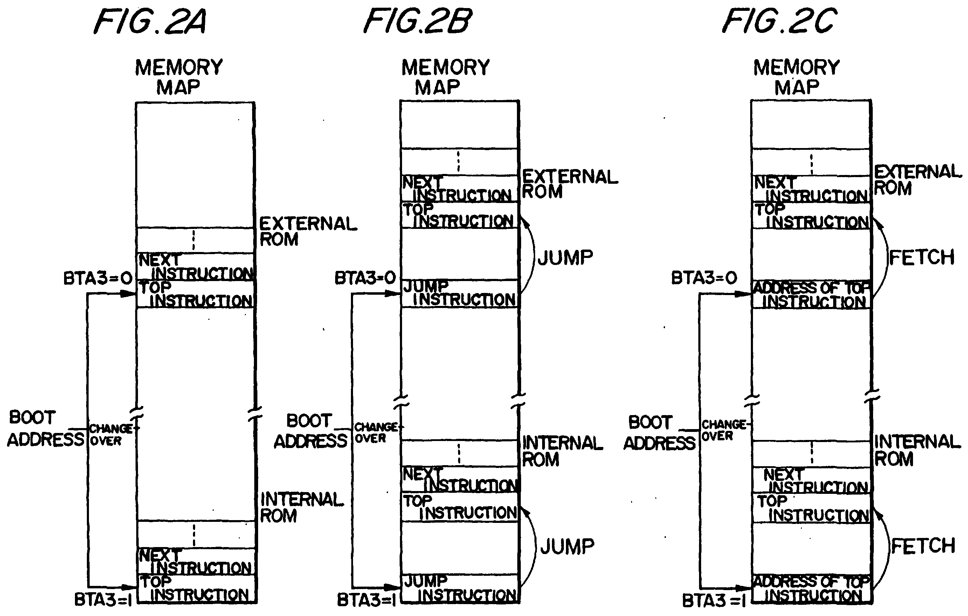

In Figure 2C, an address of the top instruction of the reset processing program is stored at a boot address. In this case, therefore, the address of the top instruction is read according to the boot address. Then, according to the read address, the top instruction is read out to start execution of the reset processing program.

In a situation where 32-bit instructions are used, the technique shown in Figure 2B requires four to six bits for a jump instruction operation code, for example. Therefore, the number of bits available for specifying a jump address is limited to 26 to 28 bits. In contrast, the technique shown in Figure 2C has the advantage that all 32 bits can be used for addressing.

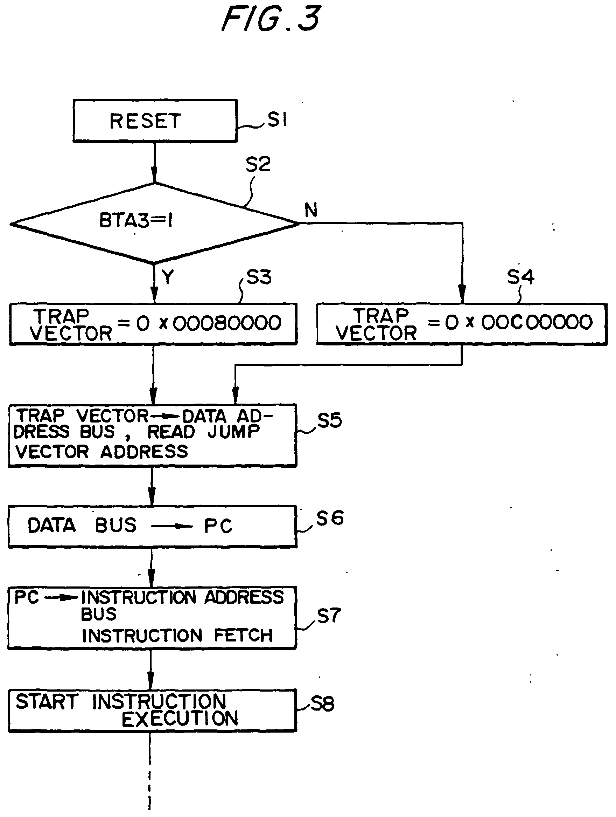

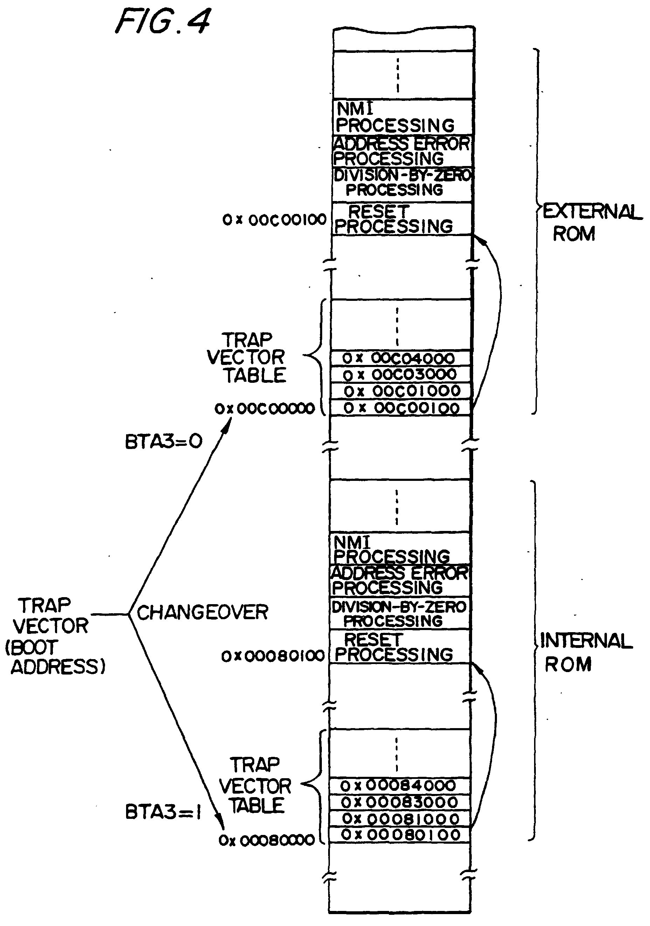

The following describes an example of operation in detail in the present embodiment with particular reference to Figure 3 (flowchart) and Figure 4. In the example detailed below, execution of the reset processing program is started using the technique shown in Figure 2C.

When the microcomputer 101 is reset, a judgement is made as to whether the changeover terminal BTA3 is in state '1' or not (steps S1 and S2). Then, if the changeover terminal BTA3 is in state '1', a trap vector (boot address) of 0x00080000 is generated (step S3). If the changeover terminal BTA3 has state '0', a trap vector of 0x00C00000 is generated (step S4). In the changeover circuit 150 shown in Figure 1, a trap vector is generated by decoding a signal from the changeover terminal BTA3 or a reset signal, for example.

The trap vector thus generated is output to a data address bus, and then a jump vector address is read (step S5). For instance, if BTA3 is set to state '1' and a trap vector of 0x00080000 is generated, a jump vector address of 0x00080100 is read from a trap vector table contained in the internal ROM 112. In contrast, if BTA3 is set to state '0' and a trap vector of 0x00C00000 is generated, a jump vector address of 0x00C00100 is read from a trap vector table contained in the external ROM 116.

Then, the jump vector address thus read is input to the PC 120 through a data bus (step S6). The jump vector address is set in the PC 120. For instance, if BTA3 is in state '1', a jump vector address of 0x00080100 (or a top address of the reset processing program stored in the internal ROM) is set in the PC 120. If BTA3 is in state '0', a jump vector address of 0x00C00100 (or a top address of the reset processing program stored in the external ROM) is set in the PC 120.

When the jump vector address is set in the PC 120, it is output from the PC 120 to an instruction address bus. Then, the top instruction of the reset processing program is fetched (step S7). For instance, if BTA3 is in state '1', the top instruction of the reset processing program stored in the internal ROM 112 is fetched. If BTA3 is in state '0', the top instruction of the reset processing program stored in the external ROM 116 is fetched. Upon receiving the top instruction, the instruction decoder 118 analyzes this instruction to start instruction execution (step S8). At this step of the operation, the address of the top instruction of the reset processing program (or a jump vector address) is set in the PC 120. Therefore, when execution of the top instruction is completed and the program count is incremented, the PC 120 indicates the next instruction following the top instruction. Thus, execution of the next instruction is enabled.

According to the present embodiment mentioned above, the user can select an arbitrary program startup location after resetting.

For example, if it is desired to start a program from the internal ROM 112 after resetting, BTA3 is set to state '1' and the reset processing program is stored in the internal ROM 112. In the example shown in Figure 4, a desired jump vector address is stored at the address 0x00080000 and the reset processing program is stored at a location corresponding to this jump vector address. Thus, the program can be started from the internal ROM 112, thereby eliminating the need for providing the external ROM 116 outside the microcomputer 101. This reduces cost, size, and power consumption of the electronic equipment containing the microcomputer 101. For instance, if it is permitted to start the microcomputer 101 only from the external ROM 116, the external ROM 116 may be required only for the purpose of starting the reset processing program, resulting in a disadvantage such as an increase cost of the electronic equipment. According to the present embodiment, it becomes possible to overcome this disadvantage.

In contrast, if it is desired to start a program from the external ROM 116, BTA3 is set to state '0' and the reset processing program is stored in the external ROM 116. In the example shown in Figure 4, a desired jump vector address is stored at the address 0x00C00000 and the reset processing program is stored at a location corresponding to this jump vector address. In a situation where electronic equipment is in the development phase and the program debugging is not yet completed, it is preferable to make a program startup from the external ROM 116 since a certain period of turnaround time is required to modify a program stored in the internal ROM 110. Then, when the development phase of the electronic equipment is completed with finalization of the contents of the program and the mass-production phase is entered, the changeover terminal BTA3 is set to state '1' so that a program startup can be made from the internal ROM 112. In the case where priority is given to prompt countermeasures against a possible defect in a product, it is preferable to make a program startup from the external ROM 116 in the mass-production phase as well as in the development phase of the electronic equipment. In such a case, BTA3 is always set to state '0'.

As described above, and according to the present embodiment, since the user can select an arbitrary program startup location after resetting, convenience to the user can be enhanced substantially.

### Second Embodiment

The second embodiment presents a detailed example of a microcomputer in accordance with this invention.

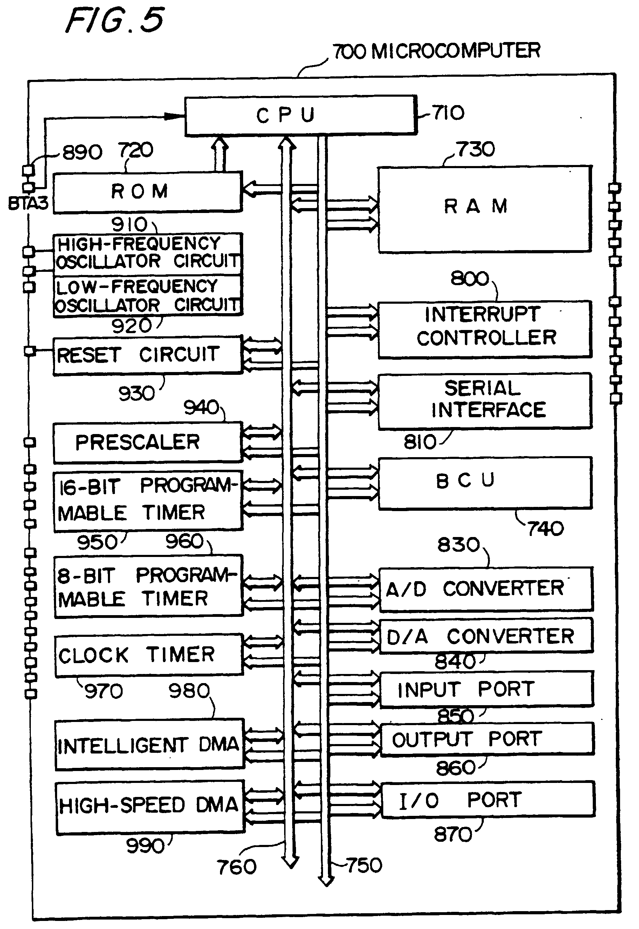

As shown in Figure 5, a microcomputer 700 of the second embodiment is a 32-bit microcomputer, which comprises: a CPU 710; a ROM 720; a RAM 730; a high-frequency oscillator circuit 910; a low-frequency oscillator circuit 920; a reset circuit 930; a prescaler 940; a timer circuit including a 16-bit programmable timer 950, 8-bit programmable timer 960 and clock timer 970; a data transfer control circuit including an intelligent DMA 980 and high-speed DMA 990; an interrupt controller 800; a serial interface 810; a BCU 740; an analog interface circuit including an A/D converter 830 and D/A converter 840; an I/O circuit including an input port 850, output port 860 and I/O port 870; various buses 750 and 760 for connecting these circuits; and various terminals 890 including a BTA3 terminal.

The microcomputer 700 formed on one chip of a semiconductor substrate is of an RISC type that is capable of processing 32-bit data. Using a pipelined architecture and load store architecture, the microcomputer 700 carries out virtually every instruction in a one clock cycle. All the instructions are described in a fixed length of 16 bits, thus substantially reducing the instruction code size.

### Third Embodiment

The third embodiment is concerned with electronic equipment containing the microcomputer mentioned in the first and second embodiments. As described in the first and second embodiments, the microcomputer in these embodiments allows the user to select an arbitrary program startup location after resetting through use of the changeover terminal BTA3. In the embodiment of electronic equipment containing such a microcomputer, it becomes possible to reduce the cost, physical size and power consumption and shorten the development period.

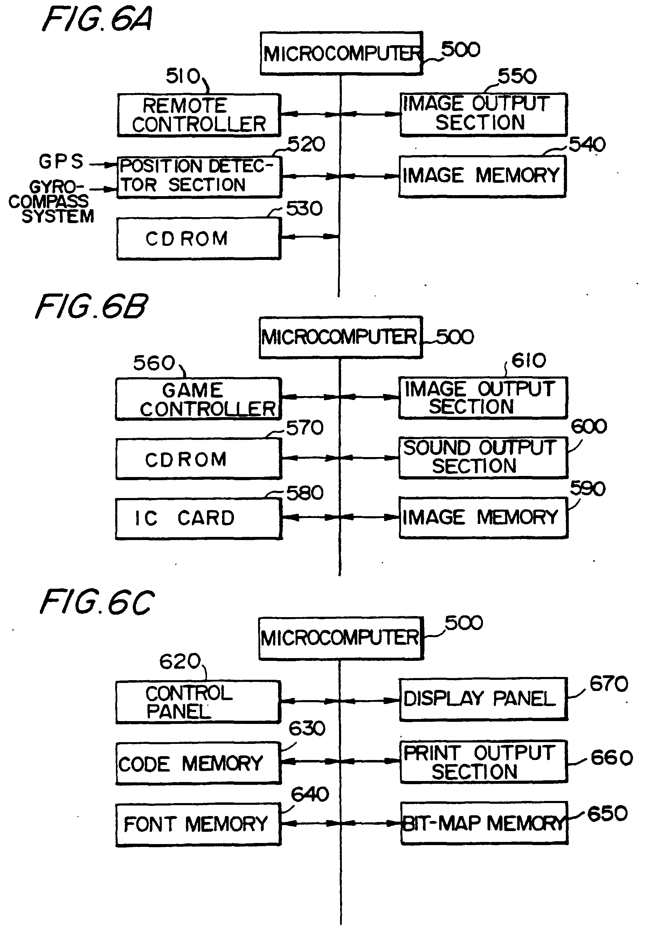

Figure 6A shows an internal block diagram of a car navigation system, which is an example of the electronic equipment, and Figure 7A gives an external view. The car navigation system is operated using a remote controller 510, and a position detector section 520 determines the location of the car according to information received from the global positioning system (GPS) or gyrocompass system. Map information is stored on a CDROM 530 (information storage medium). An image memory 540 serves as a working area for image processing, and the image generated is displayed through an image output section 550 so that the driver can view it. A microcomputer 500 receives data from such input data sources as the remote controller 510, position detector section 520 and CDROM 530, carries out various types of processing, and outputs processed data through an output apparatus such as the image output section 550.

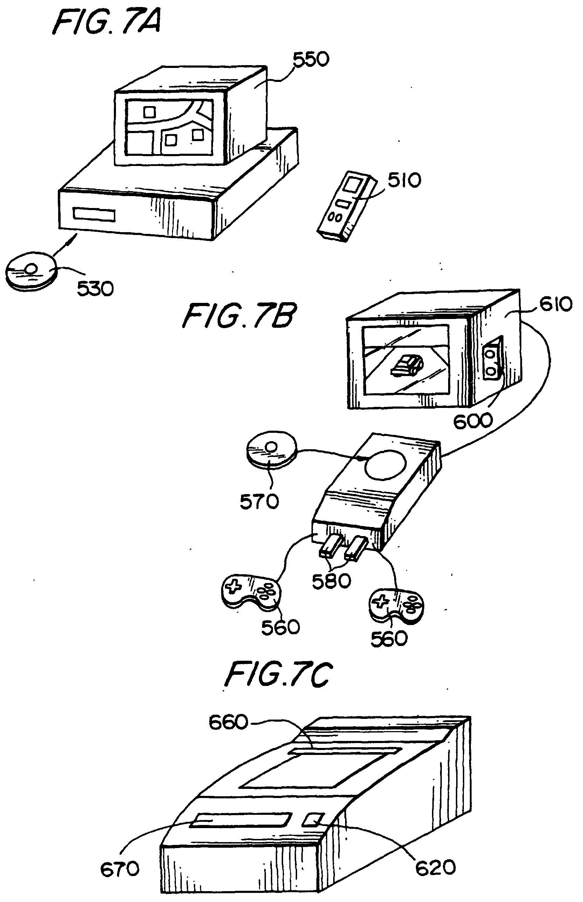

Figure 6B shows an internal block diagram of a game machine, which is another example of the electronic equipment, and Figure 7B gives an external view. In the game machine exemplified here, according to player control information from a game controller 560, a game program from a CDROM 570 and player information from an IC card 580, a game image and sound are generated using an image memory 590 as a working area. These are output through an image output section 610 and a sound output section 600.

Figure 6C shows an internal block diagram of a printer, which is another example of electronic equipment, and Figure 7C gives the external view. In the printer exemplified here, according to control information from a control panel 620 and character information from a code memory 630 and a font memory 640, a print image is generated using a bit-map memory 650 as a working area and this image is output through a print output section 660. A printer status and operation mode is indicated to the user on a display panel 670. In addition to the electronic equipment mentioned above, the microcomputer of the present invention is applicable to a variety of electronic equipment including; a mobile telephone (cellular phone), PHS telephone, pager, audio equipment, electronic notebook, electronic calculator, POS terminal, touch-panel-equipped device, projector, word processor, personal computer, television set, video tape recorder with viewfinder/direct-view monitor, and the like.

Having described the present invention as related to the first, second and third embodiments, it is to be understood that various changes and modifications may be made in the invention without departing from the spirit and scope thereof.

For example, in the abovementioned embodiments, the changeover terminal BTA3 is used for determining whether a program startup is to be made from the internal ROM or the external ROM. Although the present invention is particularly useful in the case where such a changeover is performed, the invention is not limited thereto but may be practiced or embodied in still other ways using any provision for switching a boot address to be read first by the CPU (control circuit) after resetting according to the state of the changeover terminal.

An arrangement may also be provided so that two bits or more are assigned to the changeover terminal.

In addition, the present invention is not limited in its application to the techniques shown in Figures 2A, 2B and 2C for starting execution of the reset processing program using a boot address.

## Claims

1. A microcomputer comprising:
a control circuit for reading an instruction, analyzing said instruction and controlling execution of said instruction;
a given changeover terminal; and
a changeover circuit for switching a boot address to be read first by said control circuit after resetting, according to the state of said changeover terminal.

2. The microcomputer as defined in claim 1,
wherein a top instruction of a program to be executed first after resetting is stored at said boot address.

3. The microcomputer as defined in claim 1,
wherein a jump instruction to an address of a top instruction of a program to be executed first after resetting is stored at said boot address.

4. The microcomputer as defined in claim 1,
wherein an address of a top instruction of a program to be executed first after resetting is stored at said boot address.

5. The microcomputer as defined in claim 1,
wherein said boot address is an address of an internal ROM incorporated in said microcomputer when said changeover terminal is in a first state; and
wherein said boot address is an address of an external ROM disposed outside said microcomputer when said changeover terminal is in a second state.

6. Electronic equipment comprising:
the microcomputer as defined in any one of claims 1 to 5;
an input data source for supplying data to be processed by said microcomputer; and
an output apparatus for outputting data processed by said microcomputer.
